# EUROPEAN PATENT SPECIFICATION

(11) **EP 3 473 750 B1**
(45) Date of publication and mention of the grant of the patent: **20.11.2024**
(21) Application number: 16897135.6
(22) Date of filing: 30.03.2016
(51) Int. Cl.: C25B 3/25, C25B 9/70, C25B 1/29, C25B 15/08

(54) **ELECTROLYSIS METHOD USING AN ELECTROLYSIS SYSTEM**
ELEKTROLYSEVERFAHREN UNTER VERWENDUNG EINES ELEKTROLYSESYSTEMS
MÉTHODE D'ÉLECTROLYSE UTILISANT UN SYSTÈME D'ÉLECTROLYSE

(30) Priority: 29.03.2016 KR 20160037987
(43) Date of publication of application: 24.04.2019
(73) Proprietor: Techwin Co., Ltd., Cheongju-si, Chungcheongbuk-do 28580 (KR)
(72) Inventor: JUNG, Boong Ik, Cheongju-si Chungcheongbuk-do 28457 (KR); KIM, Jung Sik, Cheongju-si Chungcheongbuk-do 28424 (KR); SHIN, Hyun Su, Daejeon 34390 (KR); HYUN, Sun Taek, Cheongju-si Chungcheongbuk-do 28426 (KR)
(74) Representative: Krauns, Christian
(86) International application number: PCT/KR2016/003232
(87) International publication number: WO 2017/171114

(56) References cited:
- WO-A2-2012/040503
- DE-A1- 102013 224 202
- JP-A- 2009 511 740
- KR-B1- 101 118 795
- KR-B1- 950 006 502
- US-A- 4 391 680
- US-A1- 2012 228 146
- US-A1- 2013 105 304
- FERRER J S J ET AL: "Formic acid regeneration by electromembrane processes", JOURNAL OF MEMBRANE SCIENCE, ELSEVIER BV, NL, vol. 280, no. 1-2, 1 September 2006 (2006-09-01), pages 509 - 516, XP024931990, ISSN: 0376-7388, [retrieved on 20060901], DOI: 10.1016/J.MEMSCI.2006.02.012

## Description

### Technical Field

The present invention relates to an electrolysis method using an electrolysis system. More particularly, the present invention relates to an electrolysis method, in which a reaction of generating peroxodisulfate through electrolysis of sulfuric acid ions at an anode and a reaction of generating formate through electrolysis of carbon dioxide at a cathode are simultaneously implemented in a single electrolytic bath to thus simultaneously produce an oxidant and a chemical product and in which a concentration-acidification unit for converting the formate into formic acid is separately provided to thus minimize the addition of chemicals necessary for producing chemical products.

### Background Art

In an electrochemical reaction, an oxidation reaction in an anode chamber of an electrolytic bath and a reduction reaction in a cathode chamber of the electrolytic bath occur simultaneously.

In most electrochemical processes, a target product is manufactured through an anodic or cathodic reaction. On the opposite counter electrode, an acid or a base is produced through the electrochemical reaction of water, which is a solvent in a solution. These reactants are generated as byproducts, and are treated as a waste solution or used for another purpose.

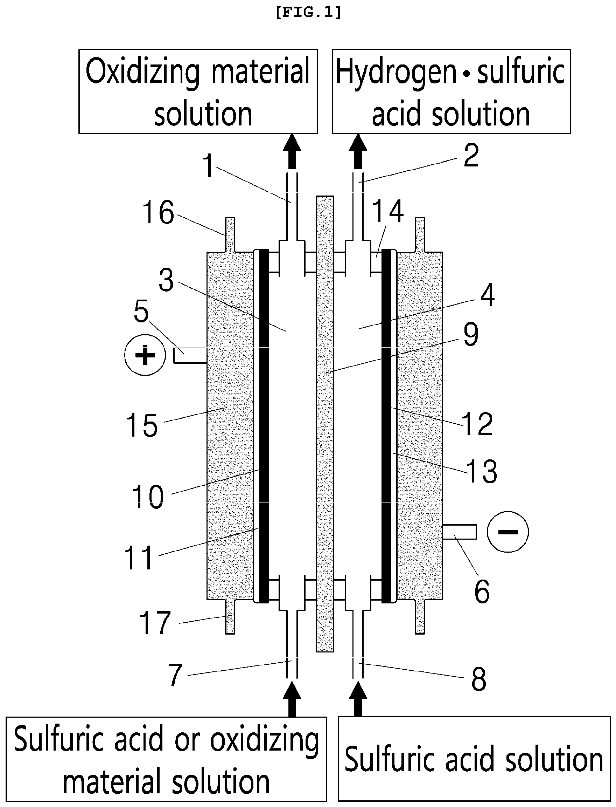

For example, Korean Patent No. 10-1525340 discloses "a conductive diamond electrode, and a sulfuric-acid electrolysis method and a sulfuric-acid electrolytic apparatus using the same" as a technology for producing an oxidant using an oxidation reaction occurring in an anode chamber of an electrolytic bath. As shown in FIG. 1, an anode chamber 3, in which a conductive diamond anode 10 is received and which is filled with an electrolyte solution including sulfuric acid ions, and a cathode chamber 4, in which a conductive diamond cathode 12 is received and which is filled with sulfuric acid at the same concentration as that in the anode chamber 3, are partitioned by a porous PTFE diaphragm 9. An anolyte supply port 7 is connected to the anode chamber 3, and sulfuric acid, which is an anolyte, is supplied to the anode chamber 3 through the anolyte supply port 7. Further, a catholyte supply port 8 is connected to the cathode chamber 4, and a catholyte is supplied to the cathode chamber 4 through the catholyte supply port 8. The oxidizing material solution generated in the anode chamber 3 is discharged through an anolyte outlet 1. Further, the hydrogen and the residual sulfuric acid solution generated in the cathode chamber 4 are discharged through a catholyte outlet 2. When sulfuric acid, which is an anode electrolyte, is injected into the anode chamber, peroxodisulfuric acid is generated through an anodic reaction. In the cathode chamber, hydrogen (H₂) and hydroxide ions (OH⁻) are generated through the electrolytic reaction of H₂O, which is a solvent in the cathode solution. The hydroxide ions (OH⁻) meet hydrogen ions (H⁺) moved after the reaction in the anode or hydrogen ions (H⁺) in the sulfuric acid (H₂SO₄) supplied to the cathode chamber, so that the concentration of the cathode solution is controlled through a neutralization reaction. Generated H₂ is mainly diluted and then discarded. As described above, the oxidizing material, which is a peroxodisulfur oxide generated using an anodic reaction, is produced as a target product, and the hydroxide ions generated using a cathodic reaction are discarded through a neutralization reaction.

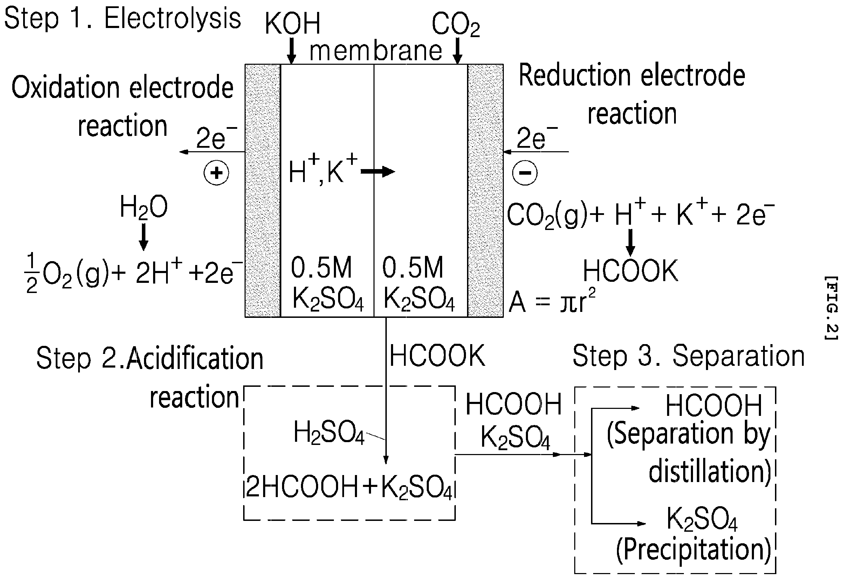

As another example of the prior art, Korean Patent No. 10-1372532 discloses "an electrochemical reduction method of carbon dioxide using a solution including potassium sulfate", in which chemical products are produced using a reduction reaction occurring in a cathode chamber of an electrolytic bath. FIG. 2 is an exemplary view showing a conventional electrochemical conversion process of carbon dioxide under a solution condition including potassium sulfate. In a first step, on an oxidation electrode portion, oxygen is generated according to the oxidation reaction of water, which is a solvent, and hydrogen ions (H⁺) are generated. K⁺ and H⁺ in a solution phase pass through a cation membrane to a reduction electrode unit. On the reduction electrode unit, carbon dioxide is converted into formate (HCOOK) using an electrode reaction. In this process, KOH is continuously supplied to an oxidation reaction unit in order to balance the ions. In a second step, one equivalent of potassium sulfate is produced when two equivalents of formic acid are produced using sulfuric acid (H₂SO₄). In the third step, formic acid is distilled and potassium sulfate is precipitated, so that the formic acid and the potassium sulfate are separated.

The US 2013/105304 A1 discloses methods and systems for electrochemical conversion of carbon dioxide to organic products including formate and formic acid. The system includes an electrochemical cell including a cathode compartment containing a high surface area cathode and a bicarbonate-based catholyte saturated with carbon dioxide. The high surface area cathode includes an indium coating and having a void volume of between about 30 % to 98 %. The system also includes an anode compartment containing an anode and an acidic anolyte. The electrochemical cell is configured to produce a product stream upon application of an electrical potential between the anode and the cathode.

The US 4 391 680 A discloses a preparing of an alkali metal hydroxide by a water splitting and hydrolysis. A two-compartment water splitter having alternating cation and bipolar membranes is used to remove alkali metal cations from an aqueous alkali metal chloride solution so as to produce an acidified salt solution. The coproduct is a base such as NaOH or KOH. The acidified salt solution is then fed to a membrane or diaphragm electrolytic cell for production of chlorine and alkali metal hydroxide.

The DE 10 2013 224 202 A1 discloses an electrolytic cell and a method for producing chemical products by means of an electrolytic cell.The electrolytic cell comprises an anode having an anode-side electrolyte and a cathode having a cathode-side electrolyte, wherein the anode-side electrolyte comprises a sulfate which is oxidized to a peroxodisulfate, and wherein the cathode-side electrolyte includes carbon dioxide which is reduced at the cathode, which is reduced at the cathode. The method for producing chemical products by means of an electrolytic cell oxidizes a sulphate to a peroxodisulphate at the anode of the electrolytic cell and reduces carbon dioxide at the cathode.

Further prior art is discussed by Ferrer J. S. J. et al. in their paper entitled "Formic acid regeneration by electromembrane processes", Journal of Membrane Science, Elsevier BV, NL, vol. 280, no. 1-2, ISSN 0376-7388, (20060901), pages 509 to 516.

Carbon dioxide, which is a reactant, is injected into the cathode chamber in a gas phase or in the state of being dissolved in an electrolyte, and formic acid ions are generated through a cathodic reaction. In the anode chamber, O₂ is generated through a decomposition reaction of H₂O, which is a solvent, and generated O₂ is mainly diluted and then discarded.

The problems with the conventional technologies are as follows.

First, among the electrolytic reactions of an anode and a cathode, only the reaction of one side is used to generate a necessary chemical agent, and the product produced at the other electrode is obtained as a byproduct.

Second, a chemical material such as hydrochloric acid or sulfuric acid needs to be injected in order to convert formate into formic acid by acidifying the formate, which generates byproducts.

### Disclosure

### Technical Problem

An object of the present invention is to provide an electrolysis method using an electrolysis system capable of simultaneously producing two high-value-added chemical products.

Another object of the present invention is to provide an electrolysis method using an electrolysis system capable of reducing the amount of electricity used in processes and generation of byproducts.

Another object of the present invention is to provide an electrolysis method using an electrolysis system in which formic acid is produced so that the injection of a chemical material such as hydrochloric acid or sulfuric acid when formate is converted into the formic acid is minimized.

### Technical Solution

The problem of the present invention is solved by the appended set of claims.

In order to accomplish the above objects, the present invention provides an electrolysis system that includes a diaphragm electrolytic bath, including an anode and a cathode disposed to face each other, and a diaphragm for partitioning an anode chamber in which the anode is positioned and a cathode chamber in which the cathode is positioned, so that an electrolyte solution containing sulfuric acid ions is supplied to the anode chamber to thus generate peroxodisulfate through an anodic reaction and a carbon dioxide gas or an electrolyte solution containing the gas dissolved therein is supplied to the cathode chamber to thus generate formate, and a concentration-acidification unit for receiving the formate, generated in the cathode chamber of the diaphragm electrolytic bath, so that the formate is reacted with hydrogen ions supplied from the outside or supplied using self-generation to thus be converted into formic acid.

According to an embodiment of the present invention, the concentration-acidification unit of the electrolysis system may include an acidification unit, for receiving the hydrogen ions necessary for the reaction using sulfuric acid from an external supply source to thus convert the formate supplied from the diaphragm electrolytic bath into the formic acid, and a separation unit, for separating and concentrating the formic acid and sulfate produced in the acidification unit to thus produce the formic acid.

More preferably, the sulfate separated using the separation unit may be supplied as a raw material of the anode chamber of the diaphragm electrolytic bath.

According to another embodiment of the present invention, the concentration-acidification unit of the electrolysis system may include a second electrolytic bath including a second anode chamber for receiving the formate generated in the cathode chamber of the diaphragm electrolytic bath and generating the hydrogen ions necessary for the reaction through an electrolytic reaction of a second anode to thus convert the formate into the formic acid, a second diaphragm through which cations, generated by converting the formate into the formic acid in the second anode chamber, pass, and a second cathode chamber for generating compounds including the cations moved from the second anode chamber through the second diaphragm.

Hydroxide ions, which are generated through an electrolytic reaction of a second cathode positioned in the second cathode chamber by supplying water to the second cathode chamber of the second electrolytic bath, may react with the cations, which are moved from the second anode chamber through the second diaphragm, to thus generate a hydroxide compound.

In another embodiment, hydroxide ions, which are generated through an electrolytic reaction of a second cathode positioned in the second cathode chamber by supplying sulfuric acid to the second cathode chamber of the second electrolytic bath, may react with the hydrogen ions of the sulfuric acid to thus be neutralized, sulfuric acid ions remaining after neutralization may react with the cations, which are moved from the second anode chamber through the second diaphragm, to thus generate sulfate, and the generated sulfate may be supplied as a raw material of an anode chamber of the diaphragm electrolytic bath.

According to another embodiment of the present invention, the concentration-acidification unit of the electrolysis system may include an electrodialysis stack in which the anode and the cathode are provided to face each other at both ends thereof, a plurality of cation-exchange membranes and a plurality of anion-exchange membranes are alternately arranged between the anode and the cathode to thus form compartments in spaces therebetween, and the formate generated in the cathode chamber of the diaphragm electrolytic bath and sulfuric acid as a supply source of the hydrogen ions from the outside are supplied to the compartments so that the formic acid and sulfate are separately generated in the different compartments using selective ion-passing characteristics of ion-exchange membranes.

The electrodialysis stack may include, as a repeating unit, four compartments of: a first compartment between a first cation-exchange membrane as a basis and a first anion-exchange membrane disposed closest to the first cation-exchange membrane in a cathode direction, a second compartment defined by the first anion-exchange membrane and a second cation-exchange membrane, disposed closest to the first anion-exchange membrane in the cathode direction, a third compartment defined by the second cation-exchange membrane and a second anion-exchange membrane, disposed closest to the second cation-exchange membrane in the cathode direction, and a fourth compartment defined by the second anion-exchange membrane and another first cation-exchange membrane, disposed closest to the second anion-exchange membrane in the cathode direction, the same compartments may communicate with each other and the different compartments may be isolated from each other in the electrodialysis stack, the formic acid may be generated and concentrated in any one compartment of the first compartment and the third compartment, the sulfate may be generated and concentrated in the remaining compartment, and the formate and the sulfuric acid may be separately supplied to the second compartment and the fourth compartment and then diluted.

According to another embodiment of the present invention, the concentration-acidification unit of the electrolysis system may include a water-splitting electrodialysis stack in which the anode and the cathode are provided to face each other at both ends thereof, and a plurality of amphoteric ion-exchange membranes and a plurality of ion-exchange membranes are included between the anode and the cathode, so that the hydrogen ions and hydroxide ions, generated due to a water decomposition characteristic of the amphoteric ion-exchange membranes, and the formate, supplied from the diaphragm electrolytic bath using the selective ion-passing characteristic of the ion-exchange membranes, are converted into the formic acid.

In the water-splitting electrodialysis stack, between the anode and the cathode at both ends thereof, a cation-exchange membrane C, the amphoteric ion-exchange membrane BPM, and an anion-exchange membrane A may be arranged in order of position from an anode side, an anion-exchange layer BA of the amphoteric ion membrane BPM may be provided to face the cation-exchange membrane C to thus form a compartment, and a cation-exchange layer BC may be provided to face the anion-exchange membrane A to thus form another compartment, the compartment between the cation-exchange membrane C and the anion-exchange layer BA of the amphoteric ion-exchange membrane BPM may constitute a base/salt-generation chamber, the compartment between the cation-exchange layer BC of the amphoteric ion-exchange membrane BPM and the anion-exchange membrane A may constitute a formic-acid generation chamber, and the compartment between the anion-exchange membrane A and the cation-exchange membrane C may constitute a formate injection chamber.

The formate generated in the cathode chamber of the diaphragm electrolytic bath may be supplied to the formate injection chamber, so that formic acid ions are passed through the anion-exchange membrane A and cations are passed through the cation-exchange membrane C to thus perform dilution, the hydroxide ions generated in the anion-exchange layer BA of the amphoteric ion-exchange membrane BPM may be bonded to the cations passing through the cation-exchange membrane C in the base/salt-generation chamber to thus generate hydroxide, followed by concentration, and the hydrogen ions generated in the cation-exchange layer BC of the amphoteric ion-exchange membrane BPM may be bonded to the formic acid ions passing through the anion-exchange membrane A in the formic-acid generation chamber to thus generate the formic acid, followed by concentration.

The anion-exchange membrane may include a monovalent-selective-anion-exchange membrane.

According to another constitution, in the water-splitting electrodialysis stack, between the anode and the cathode at both ends thereof, a cation-exchange membrane C and the amphoteric ion-exchange membrane BPM may be arranged in order of position from an anode side and an anion-exchange layer BA of the amphoteric ion-exchange membrane BPM may be provided in an anode direction, the water-splitting electrodialysis stack may include a base/salt-generation chamber, positioned between a cation-exchange membrane C1 and the anion-exchange layer BA of the amphoteric ion-exchange membrane BPM, and a formic-acid generation chamber, positioned between a cation-exchange layer BC of the amphoteric ion-exchange membrane BPM and a cation-exchange membrane C2. In the formic-acid generation chamber, the formate supplied from a cathode chamber of the diaphragm electrolytic bath may react with the hydrogen ions generated through the cation-exchange layer BC of the amphoteric ion-exchange membrane BPM to thus generate the formic acid, and remaining cations may pass through the cation-exchange membrane to the base/salt-generation chamber, and in the base/salt-generation chamber, the cations passing from the formic-acid generation chamber may meet the hydroxide ions generated through the anion-exchange layer BA of the amphoteric ion-exchange membrane BPM to thus generate hydroxide.

In the water-splitting electrodialysis stack, sulfuric acid may be supplied to the base/salt-generation chamber, the hydroxide ions generated in the anion-exchange layer of the amphoteric ion-exchange membrane BPM may be subjected to a neutralization reaction with the hydrogen ions of the supplied sulfuric acid to thus generate sulfuric acid ions, the sulfuric acid ions may be bonded to the cations passing through the cation-exchange membrane to thus generate and discharge salts of sulfate, and the discharged sulfate may be supplied as a raw material of an anode chamber of the diaphragm electrolytic bath.

An electrolysis method according to the present invention includes an electrolysis process of supplying an electrolyte solution containing sulfuric acid ions to an anode chamber of a diaphragm electrolytic bath that includes an anode and a cathode, disposed to face each other, and a diaphragm for partitioning the anode chamber in which the anode is positioned, and a cathode chamber in which the cathode is positioned to thus generate peroxodisulfate through an anodic reaction, while a carbon dioxide gas or an electrolyte solution containing the gas dissolved therein is supplied to the cathode chamber of the diaphragm electrolytic bath to thus generate formate, and a concentration-acidification process of supplying the formate generated in the cathode chamber of the diaphragm electrolytic bath, so that the formate is reacted with hydrogen ions supplied from the outside or supplied using self-generation to thus be converted into formic acid.

In the electrolysis method according to the present invention, the concentration-acidification process may include an acidification step of supplying the hydrogen ions necessary for the reaction using sulfuric acid from an external supply source so that the formate supplied from the diaphragm electrolytic bath is converted into the formic acid, and a separation step of separating and concentrating the formic acid and sulfate produced during the acidification step to thus produce the formic acid.

The electrolysis method according to another embodiment of the present invention may further include supplying the sulfate separated during the separation step as a raw material of an anode chamber of the diaphragm electrolytic bath.

In the electrolysis method according to another embodiment of the present invention, the concentration-acidification process may include supplying the formate generated in the cathode chamber of the diaphragm electrolytic bath and generating the hydrogen ions necessary for the reaction through an electrolytic reaction of a second anode disposed in a second anode chamber to thus perform conversion into the formic acid, passing cations, which are generated by converting the formate into the formic acid in the second anode chamber, through a second diaphragm, and generating a compound including the cations moved from the second anode chamber through the second diaphragm.

In the electrolysis method according to another embodiment of the present invention, hydroxide ions, which are generated through a water decomposition electrolytic reaction of a second cathode positioned in a second cathode chamber, may be reacted with the cations moved from the second anode chamber through the second diaphragm to thus generate a hydroxide compound.

The electrolysis method according to another embodiment of the present invention may further include supplying sulfuric acid to a second cathode chamber, so that hydroxide ions, which are generated through a water decomposition electrolytic reaction of a second cathode positioned in the second cathode chamber, are reacted with the hydrogen ions of the sulfuric acid to thus perform neutralization, sulfuric acid ions remaining after the neutralization are reacted with the cations moved from the second anode chamber through the second diaphragm to thus generate sulfate, and the generated sulfate is supplied as a raw material of an anode chamber of the diaphragm electrolytic bath.

In the electrolysis method according to another embodiment of the present invention, in the concentration-acidification process, an electrodialysis stack, in which an anode and a cathode are provided to face each other at both ends thereof and a plurality of cation-exchange membranes and a plurality of anion-exchange membranes are alternately arranged between the anode and the cathode to thus form compartments in spaces therebetween, may be used to thus supply the formate generated in the cathode chamber of the diaphragm electrolytic bath and sulfuric acid as a supply source of the hydrogen ions from the outside to the compartments, so that the formic acid and sulfate are separately generated in the different compartments using selective ion-passing characteristics of ion-exchange membranes.

In the electrolysis method according to another embodiment of the present invention, in the concentration-acidification process, the hydrogen ions and hydroxide ions, generated through a water decomposition characteristic of an amphoteric ion-exchange membrane, and the formate, supplied from the diaphragm electrolytic bath using a selective ion-passing characteristic of an ion-exchange membrane, may be converted into the formic acid using a water-splitting electrodialysis stack that includes the amphoteric ion-exchange membrane and the ion-exchange membrane.

The electrolysis method according to another embodiment of the present invention may further include injecting sulfuric acid to a base/salt-generation chamber of the water-splitting electrodialysis stack, so that sulfate is generated through a water-splitting electrodialysis process and the generated sulfate is supplied as a raw material of an anode chamber of the diaphragm electrolytic bath.

### Advantageous Effects

The electrolysis system and electrolysis method according to the present invention have the following effects.

First, a single electrolytic bath can be used to simultaneously produce two high-value-added chemical products and minimize the generation of byproducts through an electrolytic reaction, thereby minimizing subsequent treatment processes.

Second, it is possible to reduce the amount of electricity used in the processes and the generation of byproducts by integrating the two processes.

Third, an effect of reducing greenhouse gases can be expected due to the use of carbon dioxide.

Fourth, it is possible to minimize the additional supply of chemical materials to convert formate into formic acid.

Fifth, it is possible to reuse byproducts formed when the formate is converted into the formic acid.

### Description of Drawings

FIG. 1 is an exemplary view schematically showing the constitution of a conventional electrolytic bath using an anodic reaction;
FIG. 2 is an exemplary view schematically showing the constitution of a conventional electrolytic bath using a cathodic reaction;
FIG. 3A is an exemplary view showing the constitution of an electrolysis system according to an embodiment of the present invention;
FIG. 3B is an exemplary view showing the constitution of an electrolysis system according to another embodiment of the present invention;
FIG. 4 is an exemplary view showing the specific constitution of FIG. 3B;
FIG. 5A is an exemplary view showing the specific constitution according to the embodiment of FIG. 3A;
FIG. 5B is an exemplary view showing the specific constitution according to the embodiment of FIG. 3B;
FIG. 6 is an exemplary view showing the constitution of an electrodialysis stack as a concentration-acidification unit according to the embodiment of the present invention;
FIG. 7A is an exemplary view showing the constitution of a water-splitting electrodialysis stack as a concentration-acidification unit according to another embodiment of FIG. 3A;
FIG. 7B is an exemplary view showing the constitution of a water-splitting electrodialysis stack as a concentration-acidification unit according to another embodiment of FIG. 3B;
FIG. 8A is an exemplary view showing the constitution of another water-splitting electrodialysis stack as a concentration-acidification unit according to another embodiment of FIG. 3A;
FIG. 8B is an exemplary view showing the constitution of another water-splitting electrodialysis stack as a concentration-acidification unit according to another embodiment of FIG. 3B;
FIG. 9A is a flowchart showing the progress of an electrolysis method according to the embodiment of the present invention; and
FIG. 9B is a flowchart showing the progress of an electrolysis method according to another embodiment of the present invention.

### Best Mode

Hereinafter, an electrolysis system and an electrolysis method according to the present invention will be described in detail with reference to the accompanying drawings.

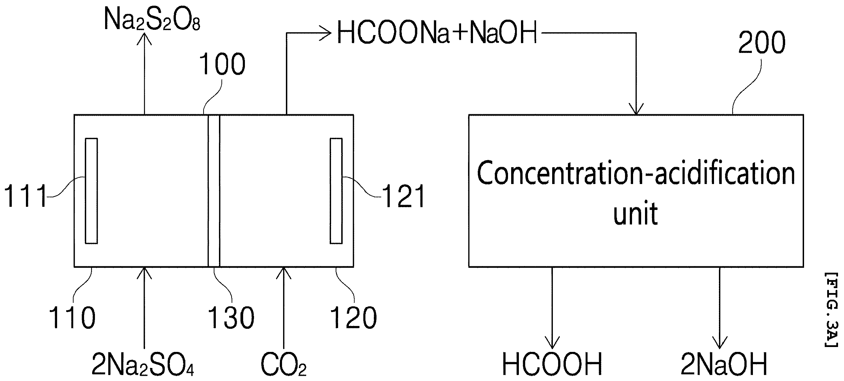

FIG. 3A is an exemplary view showing the constitution of an electrolysis system according to an embodiment of the present invention. The constitution includes a diaphragm electrolytic bath 100 and a concentration-acidification unit 200. The diaphragm electrolytic bath 100 includes a diaphragm 130, and an anode chamber 110 and a cathode chamber 120 disposed to face each other with the diaphragm 130 interposed therebetween. The anode chamber 110 having an anode 111 and the cathode chamber 120 having a cathode 121 are disposed to face each other.

An electrolyte solution including sulfuric acid ions (SO₄²⁻) is supplied to the anode chamber 110. In the present embodiment, a sodium sulfate (Na₂SO₄) aqueous solution is described as an example of an electrolyte including the sulfuric acid ions, but the example is not limited thereto, and sulfate such as potassium sulfate (K₂SO₄) and ammonium sulfate (NH₄SO₄) may be used.

In the anode chamber 110, the sulfuric acid ions (SO₄²⁻) are converted into persulfuric acid ions (S₂O₈²⁻) through an oxidation reaction of the anode 111 to thus generate sodium persulfate (Na₂S₂O₈) as shown in the reaction equation of the following Equation (1).

2Na₂SO₄ , Na₂S₂O₈ + 2Na⁺ (diaphragm passage) + 2e⁻... Equation (1)

The sodium ions (Na⁺) remaining after the reaction are moved from the anode chamber 110 to the cathode chamber 120 through the diaphragm 130.

Meanwhile, carbon dioxide (CO₂) is supplied to the cathode chamber 120 in a gas phase or in a state in which carbon dioxide is dissolved in a cathode electrolyte solution, thus generating formic acid ions (HCOO⁻) through the electrolytic reaction of the cathode 121 shown in Equation (2). The generated formic acid ions (HCOO⁻) are bonded to cations (Na⁺) moved from the anode chamber 110 through the diaphragm 130 to thus generate sodium formate (HCOONa), which is one of the formates (Equation (3)). Sodium hydroxide (NaOH), generated together with the sodium formate, is shown in order to describe a balance of the ions. The types of products may depend on the components of the electrolyte solution supplied to the cathode chamber 120, such as carbon dioxide (CO₂).

CO₂ + H₂O + 2e⁻ , HCOO⁻ + OH-............................................. Equation (2)

2Na⁺ + HCOO- + OH⁻□→ HCOONa + NaOH .............................. Equation (3)

As described above, a reaction, in which peroxodisulfate (Na₂S₂O₈) is generated from sulfate, in the anode chamber and a reaction, in which formate (HCOONa) is generated from carbon dioxide, in the cathode chamber may be simultaneously performed, thus simultaneously producing useful chemical agents in the anode chamber and in the cathode chamber.

The produced peroxodisulfate, which is the anode product, is a strong oxidant and is used for a synthetic resin polymerization catalyst, a de-sizing agent for fibers, a metal-surface-treating agent, an analytical reagent, and a treating agent for decomposing chemical materials. The chemical materials decomposed by the peroxodisulfate are chemical materials that cause pollution of soil, ground water, drainage, and waste, and are materials that are regulated by the Soil Contamination Measures Act, such as volatile organic compounds, cyanides, and metal cyano complexes, or are crude oil derivatives subject to guidelines for oil films and oil odors. Target materials containing the chemical materials decomposed by the peroxodisulfate may have the form of solid, liquid, or slurry.

Meanwhile, the anode 111 of the diaphragm electrolytic bath 100 may include an electrode manufactured using one or more materials selected from the group consisting of BDD (boron-doped diamond), DLC (diamond-like carbon), platinum (Pt), platinum plating, and DSA. The cathode 121 may include an electrode manufactured using one or more materials selected from the group consisting of BDD (boron-doped diamond), DLC (diamond-like carbon), lead (Pb), mercury (Hg), titanium (Ti), indium (In), tin (Sn), gold (Au), silver (Ag), zinc (Zn), nickel (Ni), iron (Fe), platinum (Pt), and amalgam.

The diaphragm 130 of the diaphragm electrolytic bath 100 is preferably a cation-exchange membrane. In particular, the diaphragm is more preferably a fluorine-based cation-exchange membrane.

Sodium formate (HCOONa), which is the formate generated in the cathode chamber of the diaphragm electrolytic bath 100, is provided to a concentration-acidification unit 200. In the concentration-acidification unit 200, a reaction with the hydrogen ions (H⁺) supplied from the outside or supplied using self-generation occurs to thus convert the formate (HCOONa) into formic acid (HCOOH).

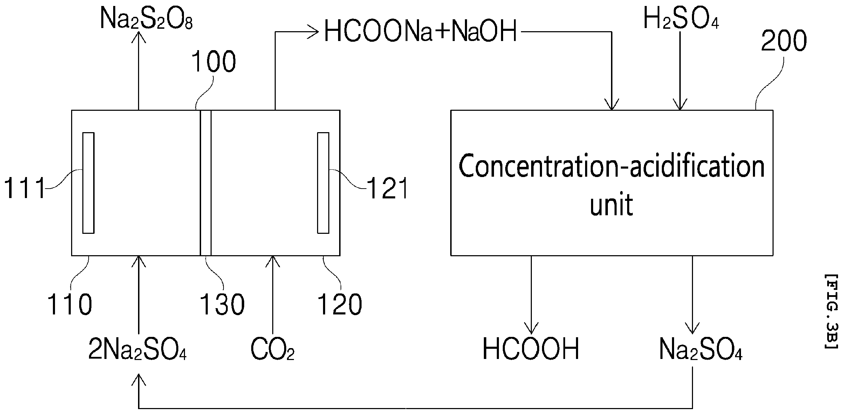

FIG. 3B is an exemplary view showing the constitution of the supply of sulfuric acid (H₂SO₄) from the outside as a source of supply of hydrogen ions (H⁺). The hydrogen ions (H⁺) of the supplied sulfuric acid (H₂SO₄) are used to convert the formate (HCOONa) into the formic acid (HCOOH) in the concentration-acidification unit 200, and the remaining cations (Na⁺) meet the sulfuric acid ions (SO₄²⁻) to thus perform the reaction of Equation (4), in which sulfate (Na₂SO₄) is generated. The generated sulfate (Na₂SO₄) may be re-supplied as a raw material of the anode chamber 110 of the diaphragm electrolytic bath 100 to thus reduce the usage of sulfuric acid ion electrolytes supplied to the anode.

The generated formic acid (HCOOH) is used for a leather treatment agent, a rubber coagulant, a dyeing aid, a mordant, leather tanning, a medicine, an epoxy plasticizer, plating, a disinfectant, flavoring, and an organic synthetic raw material. Currently, the formic acid may be used for various purposes, such as fuel of a fuel cell.

HCOONa + NaOH + H₂SO₄ → HCOOH + Na₂SO₄ + H₂O ......... Equation (4)

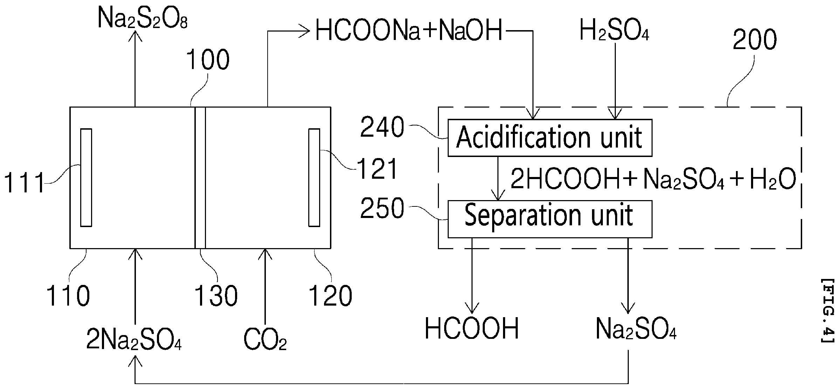

FIG. 4 is an exemplary view showing the specific constitution of FIG. 3B.

The concentration-acidification unit 200 includes an acidification unit 210, to which the formate (HCOONa) is supplied and in which the sulfuric acid (H₂SO₄) is added as a supply source of hydrogen ions (H⁺), as shown in FIG. 3B, to thus produce the formic acid (HCOOH) using the chemical reaction shown in Equation (4), and a separation unit 250, in which the generated formic acid (HCOOH) and sulfate (Na₂SO₄) are separated and concentrated to thus generate the target formic acid (HCOOH) and in which the sulfate (Na₂SO₄) is re-supplied as a raw material of the anode chamber 110 of the diaphragm electrolytic bath 100.

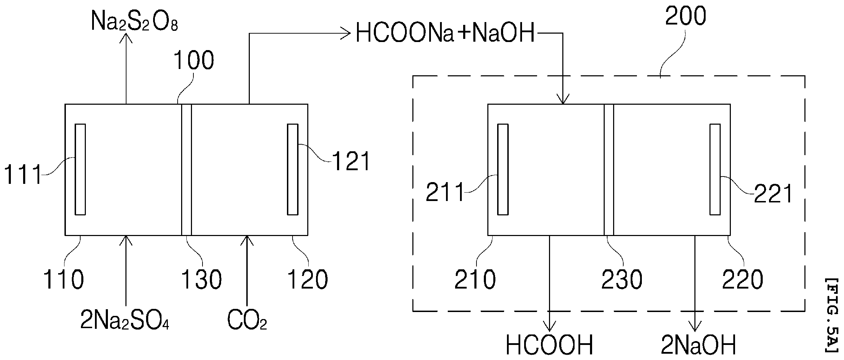

FIG. 5A is an exemplary view showing the specific constitution according to the embodiment of FIG. 3A.

The concentration-acidification unit 200 according to FIG. 5A may include a second electrolytic bath 200 having a structure similar to that of the diaphragm electrolytic bath 100. As shown in the drawing, a separate second electrolytic bath 210 includes a second anode chamber 210 and a second cathode chamber 220 disposed to face each other with a second diaphragm 230 interposed therebetween. A second anode 211 is disposed in the second anode chamber 210 and a second cathode 221 is disposed in the second cathode chamber 220 so as to face each other.

Sodium formate (HCOONa), which is the formate generated in the cathode chamber 120 of the diaphragm electrolytic bath 100, is supplied to the second anode chamber 210. In the second anode chamber 210, the hydrogen ions (H⁺) necessary for the reaction may be produced through the water decomposition electrolytic reaction of the second anode 211 as shown in Equation (5) to thus produce a target material using a reaction (Equation (6)) for conversion into the formic acid (HCOOH).

H₂O → 2H⁺ + ½O₂(↑) + 2e⁻ Equation (5)

HCOONa + NaOH + 2H⁺ → HCOOH + H₂O + 2Na⁺□ Equation (6)

Sodium ions (Na⁺), which are the cations remaining after the conversion into the formic acid (HCOOH), are moved to the second cathode chamber 220 through the second diaphragm 230, and hydroxide ions (OH⁻) are generated through the electrolytic reaction of water at the second cathode 221, so that the hydroxide ions meet the sodium ions (Na⁺) moved through the second diaphragm 230 to thus generate sodium hydroxide (NaOH) in the second cathode chamber 220.

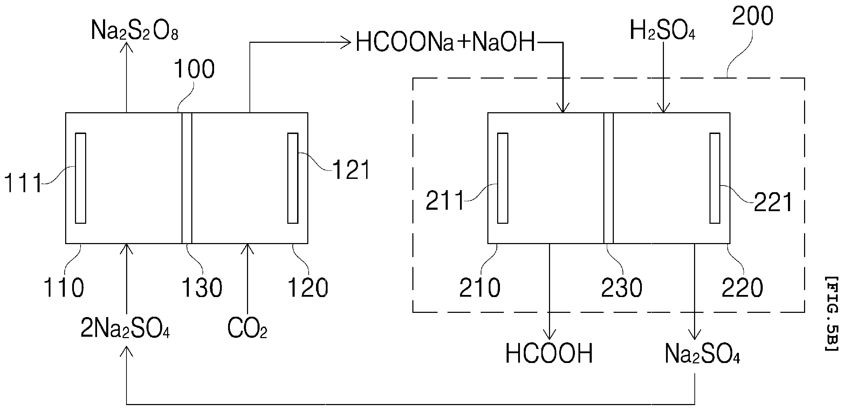

FIG. 5B is an exemplary view showing the specific constitution according to the embodiment of FIG. 3B. In another aspect, as shown in FIG. 5B, when additional sulfuric acid (H₂SO₄) is supplied to the second cathode chamber 220, the hydroxide ions (OH⁻) generated at the second cathode 221 are bonded to the hydrogen ions (H⁺) of the sulfuric acid (H₂SO₄), thus being neutralized to water (H₂O). The remaining sulfuric acid ions (SO₄²⁻) meet the sodium cations (Na⁺) moved through the second diaphragm 230 to thus generate sodium sulfate (Na₂SO₄), and the sodium sulfate is re-supplied as a raw material of the anode chamber 110 of the diaphragm electrolytic bath 100, whereby the usage of raw materials for the anode may be reduced.

A concentration-acidification unit 200 according to another embodiment of the present invention may be implemented by an electrodialysis stack in which an anode and a cathode are provided to face each other at both ends thereof and in which a plurality of cation-exchange membranes and a plurality of anion-exchange membranes are alternately arranged between the anode and the cathode to thus form compartments in spaces therebetween.

The formate (HCOONa) generated in the cathode chamber 120 of the diaphragm electrolytic bath 100 and the sulfuric acid (H₂SO₄) as a supply source of the hydrogen ions (H⁺) from the outside are supplied to the compartments of the electrodialysis stack. When a direct-current power source is supplied to each of the anode and the cathode, electrodialysis occurs due to the selective ion-passing characteristics of the ion-exchange membranes, so that the formic acid and the sulfate are separately generated and concentrated in the different compartments.

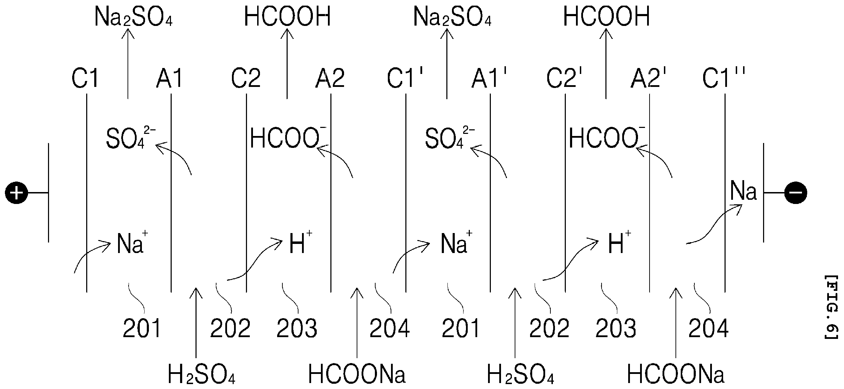

The constitution of the electrodialysis stack in an electrodialysis process is shown in FIG. 6. The electrodialysis process according to FIG. 6 will be described in more detail hereinafter. When a cation-exchange membrane is taken as a basis and is referred to as a first cation-exchange membrane C1, a first anion-exchange membrane A1, a second cation-exchange membrane C2, a second anion-exchange membrane A2, and another first cation-exchange membrane C1' may be defined to be arranged and disposed in sequence starting from the first cation-exchange membrane C1 and moving in a cathode-side direction.

The first cation-exchange membrane C1 and the first anion-exchange membrane A1 form a first compartment 201, the first anion-exchange membrane A1 and the second cation-exchange membrane C2 form a second compartment 202, the second cation-exchange membrane C2 and the second anion-exchange membrane A2 form a third compartment 203, and the second anion-exchange membrane A2 and another first cation-exchange membrane C1' form a fourth compartment 204. The four compartments are repeatedly formed using the ion-exchange membranes provided between the anode and the cathode so that multiple compartments are layered. Same compartments communicate with each other, but different compartments are isolated from each other. That is, the first compartment communicates with another first compartment, but the first compartment and the second compartment, the third compartment, or the fourth compartment are isolated from each other, so that the mass transfer is not performed without passing through the ion-exchange membrane.

In the electrodialysis stack, the formic acid (HCOOH) and the sulfate (Na₂SO₄) are generated and concentrated in the first compartment 201 and the third compartment 203, respectively, and a sulfuric acid (H₂SO₄) solution and the formate (HCOONa) generated in the cathode chamber 120 of the diaphragm electrolytic bath 100 are supplied to the second compartment 202 and the fourth compartment 204, respectively, and then diluted.

Hereinafter, a detailed description will be given with reference to the drawings. First, when the sulfuric acid (H₂SO₄) is supplied to the second compartment 202, when the formate (HCOONa) is supplied to the fourth compartment 204, and when a direct-current power source is supplied to electrodes at both ends thereof to thus perform electrodialysis, hydrogen ions (H⁺), which are cations of the sulfuric acid (H₂SO₄) supplied to the second compartment 202, are passed through the second cation-exchange membrane C2 to the third compartment 203 in a cathode direction, and the sulfuric acid ions (SO₄²⁻), which are anions, are passed through the first anion-exchange membrane A1 to the first compartment 201 in an anode direction. Further, sodium ions (Na⁺), which are the cations of sodium formate (HCOONa), which is the formate supplied to the fourth compartment 204, are passed through another first cation-exchange membrane C1' positioned in a cathode direction to the first compartment 201 adjacent thereto in another cathode-side direction. The formic acid ions (HCOO⁻), which are anions, are passed through the second anion-exchange membrane A2 positioned in an anode direction to the third compartment 203. Through the above-described process, the sulfuric acid (H₂SO₄) of the second compartment and the formate (HCOONa) of the fourth compartment are separately passed and then diluted.

In the first compartment 201, the sulfuric acid ions (SO₄²⁻) moved from the second compartment 202 meet the sodium ions (Na⁺) moved from the fourth compartment 204 adjacent thereto in another anode side direction to thus generate sodium sulfate (Na₂SO₄). In the third compartment 203, the hydrogen ions (H⁺) moved from the second compartment 202 meet the formic acid ions (HCOO⁻) moved from the fourth compartment 204 to thus generate formic acid (HCOOH).

Through this series of processes, the generation and concentration of the sodium sulfate (Na₂SO₄) in the first compartment 201, the dilution of the sulfuric acid (H₂SO₄) in the second compartment 202, the generation and concentration of the formic acid (HCOOH) in the third compartment 203, and the precipitation of sodium formate (HCOONa) in the fourth compartment 204 occur simultaneously.

The sodium formate (HCOONa) may be supplied to the second compartment 202 and the sulfuric acid (H₂SO₄) may be supplied to the fourth compartment 204. In this case, the formic acid (HCOOH) is generated in the first compartment 201 and the sodium sulfate (Na₂SO₄) is generated in the third compartment 203. Further, the anode is positioned at a left end and the cathode is positioned at a right end in the drawing, but they may be reversely positioned, and even in this case, the movement of the ions is achieved in the same manner.

In the electrodialysis, the solution supplied to each compartment is circulated and supplied in a semi-batch manner, so that generation water or dilution water may be obtained at a desired concentration. Further, preferably, separate electrode water is circulated and supplied to electrode spaces in which the anode and the cathode are positioned.

A concentration-acidification unit 200 according to another embodiment of the present invention may be implemented as a water-splitting electrodialysis stack in which an anode and a cathode are provided to face each other at both ends thereof and a plurality of amphoteric ion-exchange membranes and a plurality of cation/anion-exchange membranes are included between the anode and the cathode, so that hydrogen ions (H⁺) and hydroxide ions (OH⁻), generated due to the water decomposition characteristic of the amphoteric ion-exchange membranes, and the formate (HCOONa), supplied from the cathode chamber 120 of the diaphragm electrolytic bath 100 using the selective ion-passing characteristic of the ion-exchange membranes, are converted into formic acid (HCOOH).

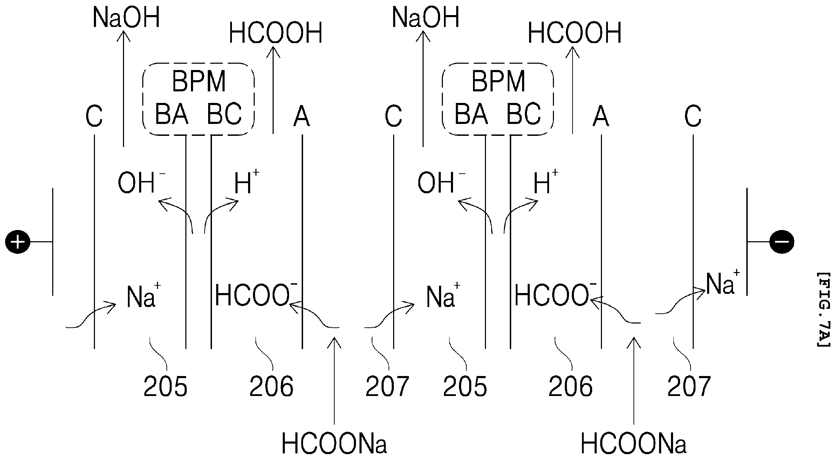

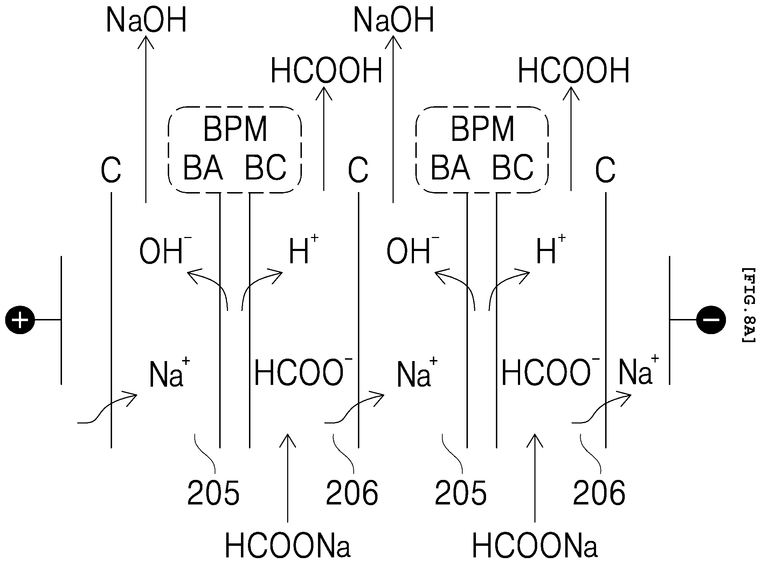

The constitution of the water-splitting electrodialysis stack is shown in FIGS. 7A to 7B and FIGS. 8A to 8B.

FIG. 7A is an exemplary view showing the constitution of the water-splitting electrodialysis stack as the concentration-acidification unit according to another embodiment of FIG. 3A. The constitution of the water-splitting electrodialysis stack according to FIG. 7A will be described in more detail as follows. As shown in FIG. 7A, in the water-splitting electrodialysis stack, the anode and the cathode are provided to face each other at both ends thereof. Between the anode and the cathode, a cation-exchange membrane C, an amphoteric ion-exchange membrane BPM, and an anion-exchange membrane A form a single unit cell, and a plurality of unit cells is layered from the anode in a cathode direction. The layering is performed so that the anion-exchange layer BA of the amphoteric ion-exchange membrane BPM is adjacent to the cation-exchange membrane C and the cation-exchange layer BC of the amphoteric ion-exchange membrane BPM is adjacent to the anion-exchange membrane A.

The compartment defined by the cation-exchange membrane C and the anion-exchange layer BA of the amphoteric ion-exchange membrane BPM constitutes a base/salt-generation chamber 205, the compartment defined by the cation-exchange layer BC of the amphoteric ion-exchange membrane BPM and the anion-exchange membrane A constitutes a formic-acid generation chamber 206, and the compartment defined by the anion-exchange membrane A and the cation-exchange membrane C constitutes a formate injection chamber 207.

Hereinafter, the operation of the invention according to the drawings will be described in detail. First, when sodium formate (HCOONa), which is the formate, is injected into the formic-acid-injection chamber 207 and when a direct-current power source is supplied to each of the anode and the cathode, the sodium ions (Na⁺) of the sodium formate (HCOONa) are passed through the cation-exchange membrane C from the formic-acid-injection chamber 207 to the base/salt-generation chamber 205, and the formic acid ions (HCOO⁻) are passed through the anion-exchange membrane A to the formic-acid generation chamber 206. Further, hydrogen ions (H⁺) are generated in the cation-exchange layer BC and hydroxide ions (OH⁻) are generated in the anion-exchange layer through a water decomposition reaction in the amphoteric ion-exchange membrane BPM. The generated hydroxide ions (OH⁻) meet the sodium ions (Na⁺) passing through the cation-exchange membrane C in the base/salt-generation chamber 205 to thus generate sodium hydroxide (NaOH), and the hydrogen ions (H⁺) meet the formic acid ions (HCOO⁻) moving through the anion-exchange membrane A in the formic-acid generation chamber 206 to thus generate formic acid (HCOOH).

Through the above-described process, the sodium formate (HCOONa) is diluted in the formate injection chamber 207, the sodium hydroxide (NaOH) is generated and concentrated in the base/salt-generation chamber 205, and the formic acid (HCOOH) is generated and concentrated in the formic-acid generation chamber 206.

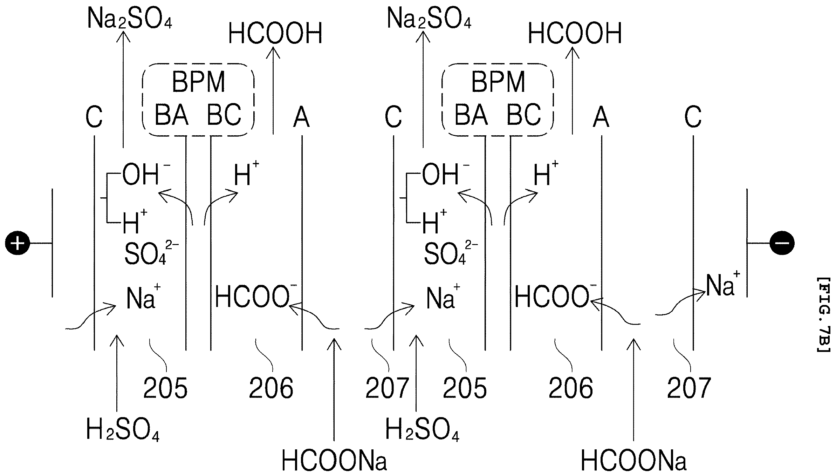

FIG. 7B is an exemplary view showing the constitution of a water-splitting electrodialysis stack as a concentration-acidification unit according to the embodiment in which sulfuric acid (H₂SO₄) is supplied as a hydrogen ion (H⁺) supply source. Referring to the constitution of FIG. 7B, the sulfuric acid (H₂SO₄) may be supplied to the base/salt-generation chamber 205 of the water-splitting electrodialysis stack, and the hydrogen ions (H⁺) of the supplied sulfuric acid (H₂SO₄) may meet the hydroxide ions (OH⁻) generated in the anion-exchange layer BA of the amphoteric ion-exchange membrane BPM during the electrodialysis process to thus be neutralized, thereby generating water. The remaining sulfuric acid ions (SO₄²⁻) may meet the sodium ions (Na⁺) moving through the cation-exchange membrane C to thus generate sodium sulfate (Na₂SO₄), and the generated sodium sulfate (Na₂SO₄) may be supplied as a raw material of the anode chamber 110 of the diaphragm electrolytic bath 100, thereby reducing the amount of chemicals that are used.

Preferably, all of the ion-exchange membranes closest to the anode and the cathode are cation-exchange membranes. Further, separate electrode water may be circulated and supplied to the compartment partitioned into the anode and the cathode. Further, preferably, the solution supplied to each compartment is circulated in a semi-batch manner so that the production water and dilution water are obtained at desired target concentration values.

Further, preferably, the anion-exchange membrane A of the water-splitting electrodialysis stack includes a monovalent-selective-anion-exchange membrane. Through this constitution, the passage of other anionic components included in the formate, which is generated from the cathode chamber 120 of the diaphragm electrolytic bath 100 and then supplied to a formate injection chamber 207, may be excluded, so that formic acid (HCOOH) having higher purity is produced.

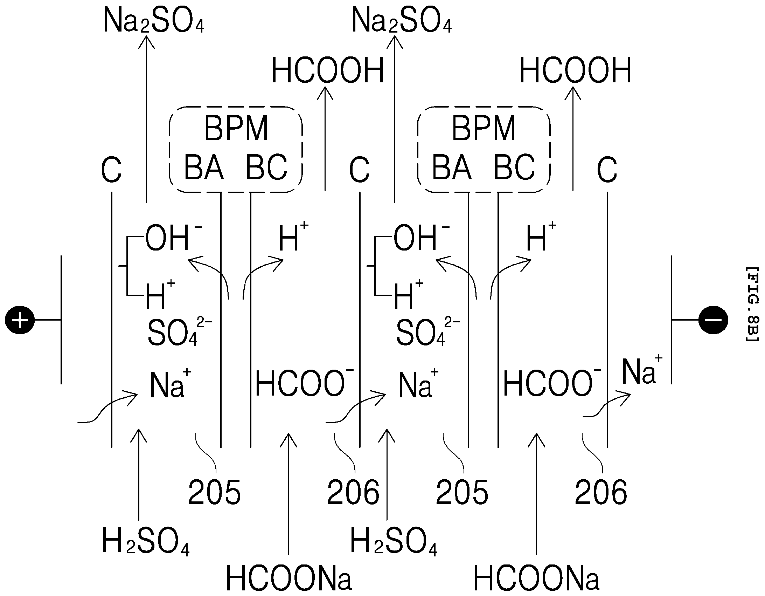

FIG. 8A is an exemplary view showing the constitution of another water-splitting electrodialysis stack as a concentration-acidification unit according to another embodiment of FIG. 3A. FIG. 8B is an exemplary view showing the constitution of another water-splitting electrodialysis stack as a concentration-acidification unit according to another embodiment of FIG. 3B. The water-splitting electrodialysis stack according to FIGS. 8A and 8B has a structure in which the anion-exchange membrane A is excluded from the water-splitting electrodialysis stack of FIGS. 7A and 7B. That is, according to the constitution of FIG. 8A, the anode and the cathode are positioned to face each other at both ends thereof, and a plurality of cation-exchange membranes C and a plurality of amphoteric ion-exchange membranes BPM are alternately arranged between the anode and the cathode. The amphoteric ion-exchange membrane BPM is provided so that the anion-exchange layer BA faces a side at which the anode is positioned and the cation-exchange layer BC faces a side at which the cathode is positioned.

The compartment defined by the cation-exchange membrane C and the anion-exchange layer BA of the amphoteric ion-exchange membrane BPM constitutes the base/salt-generation chamber 205, and the compartment defined by the cation-exchange layer BC of the amphoteric ion-exchange membrane BPM and the cation-exchange membrane C constitutes the formic-acid generation chamber 206. In this constitution, when sodium formate (HCOONa), which is the formate generated in the cathode chamber 120 of the diaphragm electrolytic bath 100, is supplied to the formic-acid generation chamber 206, and when a direct-current power source is supplied to the anode and the cathode, the sodium ions (Na⁺) of the sodium formate (HCOONa) supplied to the formic-acid generation chamber 206 are passed through the cation-exchange membrane C, which is positioned in a cathode direction to the base/salt-generation chamber 205. Further, hydrogen ions (H⁺) are generated in the cation-exchange layer BC and hydroxide ions (OH⁻) are generated in the anion-exchange layer BA through a water decomposition reaction in the amphoteric ion-exchange membrane BPM. Accordingly, in the base/salt-generation chamber 205, the hydroxide ions (OH⁻) generated in the anion-exchange layer BA of the amphoteric ion-exchange membrane BPM meet the sodium ions (Na⁺) moved through the cation-exchange membrane C to thus generate sodium hydroxide (NaOH). In the formic-acid generation chamber 206, the hydrogen ions (H⁺) generated in the cation-exchange layer C of the amphoteric ion-exchange membrane BPM meet the formic acid ions (HCOO⁻) that do not pass through the cation-exchange membrane C to thus generate formic acid (HCOOH). The purity of the formic acid produced in the two-compartment-type water-splitting electrodialysis stack may be lower than that in the three-compartment-type water-splitting electrodialysis stack of FIGS. 7A and 7B. However, since the anion-exchange membrane is removed, there are merits in that the constitution of the process is further simplified and an inter-membrane voltage is lowered, thus reducing power consumption, and in that a lifespan is increased.

In another two-compartment-type water-splitting electrodialysis stack according to FIG. 8B, the sulfuric acid (H₂SO₄) is injected into the base/salt-generation chamber 205 as in FIG. 7B. The injected sulfuric acid (H₂SO₄) is subjected to a neutralization reaction to thus generate sodium sulfate (Na₂SO₄), as in the embodiment of FIG. 7B. The sodium sulfate may be re-supplied as a raw material of the anode chamber 110 of the diaphragm electrolytic bath 100 to thus reduce the amount of raw materials that are used.

Further, as shown in FIG. 7B, the cation-exchange membrane may be used as the membrane adjacent to the electrode, an electrode solution may be supplied separately, and the operation may be performed using a semi-batch process, thereby further increasing operational efficiency.

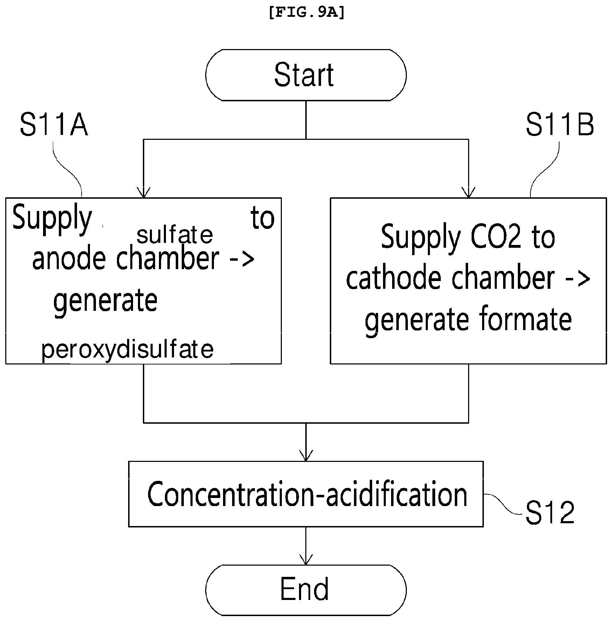

FIG. 9A is a flowchart showing the progress of an electrolysis method according to the embodiment of the present invention. As shown in the drawing, electrolysis operations are simultaneously performed in the anode chamber and the cathode chamber of the electrolytic bath. The sulfate is supplied to the anode chamber of the electrolytic bath to thus generate sodium persulfate (Na₂S₂O₈), which is peroxodisulfate (S11A), and carbon dioxide is supplied to the cathode chamber of the electrolytic bath to thus generate formate (S11B).

The formate generated in the cathode chamber of the electrolytic bath is converted into formic acid through a concentration-acidification process (S12).

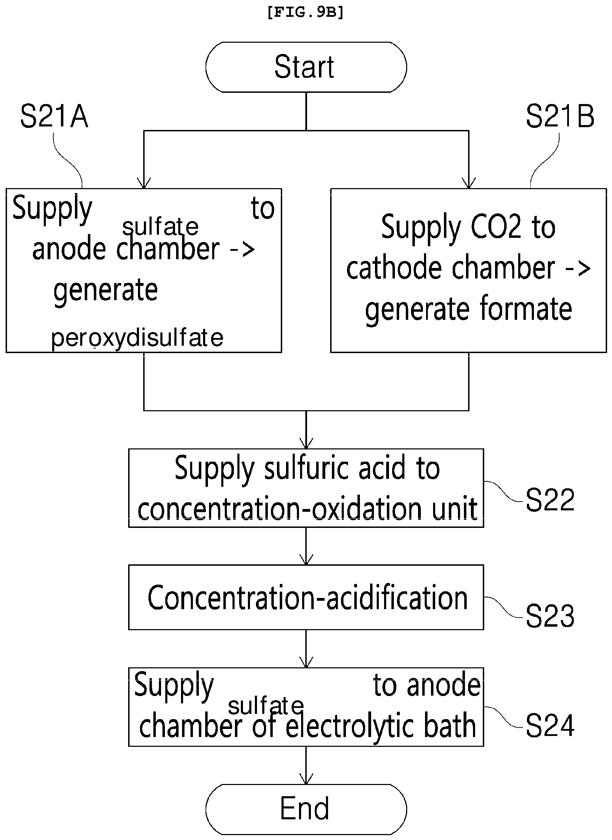

FIG. 9B is a flowchart showing the progress of an electrolysis method according to another embodiment of the present invention. Sulfate is supplied to the anode chamber of the electrolytic bath to thus generate sodium persulfate (Na₂S₂O₈), which is peroxodisulfate (S21A), and carbon dioxide is supplied to the cathode chamber of the electrolytic bath to thus generate formate (S21B).

The formate generated in the cathode chamber of the electrolytic bath is supplied to a concentration-acidification unit, and sulfuric acid (H₂SO₄) is supplied as a supply source of hydrogen ions (H⁺), necessary for converting the formate into the formic acid, to the concentration-acidification unit (S22).

The formic acid (HCOOH) and the sulfate (Na₂SO₄) generated through a chemical reaction are separated and concentrated to thus generate a target formic acid (HCOOH) in the concentration-acidification unit (S23).

There may be provided a circulation structure in which the sulfate generated during the acidification process is supplied to the anode chamber of the electrolytic bath (S24).

## Claims

1. An electrolysis method comprising:
an electrolysis process of (S21A) supplying an electrolyte solution containing sulfuric acid ions to an anode chamber (110) of a diaphragm electrolytic bath (100) that includes an anode and a cathode disposed to face each other, and a diaphragm (130) for partitioning the anode chamber (110) in which the anode is positioned and a cathode chamber in which the cathode is positioned to thus generate peroxydisulfate through an anodic reaction, while a carbon dioxide gas or an electrolyte solution containing the gas dissolved therein is supplied (S21B) to the cathode chamber of the diaphragm electrolytic bath (100) to thus generate formate; and
a concentration-acidification process of supplying the formate generated in the cathode chamber of the diaphragm electrolytic bath (100), so that the formate is reacted with hydrogen ions supplied from an outside or supplied using self-generation to thus be converted into formic acid;
wherein the concentration-acidification process includes:
(S22) an acidification step of supplying the hydrogen ions necessary for the reaction using sulfuric acid from an external supply source so that the formate supplied from the diaphragm electrolytic bath (100) is converted into the formic acid; and
(S23) a separation step of separating and concentrating the formic acid and sulfate produced during the acidification step to thus produce the formic acid, and further comprising:
(S24) supplying the sulfate separated during the separation step as a raw material of the anode chamber (110) of the diaphragm electrolytic bath (100).

2. An electrolysis method comprising:
an electrolysis process of (S21A) supplying an electrolyte solution containing sulfuric acid ions to an anode chamber (110) of a diaphragm electrolytic bath (100) that includes an anode and a cathode disposed to face each other, and a diaphragm (130) for partitioning the anode chamber (110) in which the anode is positioned and a cathode chamber in which the cathode is positioned to thus generate peroxydisulfate through an anodic reaction, while a carbon dioxide gas or an electrolyte solution containing the gas dissolved therein is supplied (S21B) to the cathode chamber of the diaphragm electrolytic bath (100) to thus generate formate; and
a concentration-acidification process of supplying the formate generated in the cathode chamber of the diaphragm electrolytic bath (100), so that the formate is reacted with hydrogen ions supplied from an outside or supplied using self-generation to thus be converted into formic acid;
wherein the concentration-acidification process includes:
supplying the formate generated in the cathode chamber of the diaphragm electrolytic bath (100) and generating the hydrogen ions necessary for the reaction through an electrolytic reaction of a second anode (211) disposed in a second anode chamber (210) to thus perform conversion into the formic acid;
passing cations, which are generated by converting the formate into the formic acid in the second anode chamber (210), through a second diaphragm (230); and
generating a compound including the cations moved from the second anode chamber (210) through the second diaphragm (230), and wherein:
hydroxide ions, which are generated through a water decomposition electrolytic reaction of a second cathode (221) positioned in a second cathode chamber (220), are reacted with the cations moved from the second anode chamber (210) through the second diaphragm (230) to thus generate a hydroxide compound.

3. The electrolysis method of claim 2, further comprising:
supplying sulfuric acid to a second cathode chamber (220), so that hydroxide ions, which are generated through a water decomposition electrolytic reaction of the second cathode (221) positioned in the second cathode chamber (220), are reacted with the hydrogen ions of the sulfuric acid to thus perform neutralization, sulfuric acid ions remaining after the neutralization are reacted with the cations moved from the second anode chamber (210) through the second diaphragm (230) to thus generate sulfate, and the generated sulfate is supplied as a raw material of an anode chamber (110) of the diaphragm electrolytic bath (100).

4. An electrolysis method comprising:
an electrolysis process of (S21A) supplying an electrolyte solution containing sulfuric acid ions to an anode chamber (110) of a diaphragm electrolytic bath (100) that includes an anode and a cathode disposed to face each other, and a diaphragm (130) for partitioning the anode chamber (110) in which the anode is positioned and a cathode chamber in which the cathode is positioned to thus generate peroxydisulfate through an anodic reaction, while a carbon dioxide gas or an electrolyte solution containing the gas dissolved therein is supplied (S21B) to the cathode chamber of the diaphragm electrolytic bath (100) to thus generate formate; and
a concentration-acidification process of supplying the formate generated in the cathode chamber of the diaphragm electrolytic bath (100), so that the formate is reacted with hydrogen ions supplied from an outside or supplied using self-generation to thus be converted into formic acid,
wherein in the concentration-acidification process, an electrodialysis stack, in which an anode and a cathode are provided to face each other at both ends thereof and a plurality of cation-exchange membranes and a plurality of anion-exchange membranes are alternately arranged between the anode and the cathode to thus form compartments, is used to thus supply the formate generated in the cathode chamber of the diaphragm electrolytic bath (100) and sulfuric acid as a supply source of the hydrogen ions from an outside to the compartments, so that the formic acid and sulfate are separately generated in the different compartments using selective ion-passing characteristics of ion-exchange membranes.

5. An electrolysis method comprising:
an electrolysis process of (S21A) supplying an electrolyte solution containing sulfuric acid ions to an anode chamber (110) of a diaphragm electrolytic bath (100) that includes an anode and a cathode disposed to face each other, and a diaphragm (130) for partitioning the anode chamber (110) in which the anode is positioned and a cathode chamber in which the cathode is positioned to thus generate peroxydisulfate through an anodic reaction, while a carbon dioxide gas or an electrolyte solution containing the gas dissolved therein is supplied (S21B) to the cathode chamber of the diaphragm electrolytic bath (100) to thus generate formate; and
a concentration-acidification process of supplying the formate generated in the cathode chamber of the diaphragm electrolytic bath (100), so that the formate is reacted with hydrogen ions supplied from an outside or supplied using self-generation to thus be converted into formic acid;
wherein in the concentration-acidification process, the hydrogen ions and hydroxide ions, generated through a water decomposition characteristic of an amphoteric ion-exchange membrane, and the formate, supplied from the diaphragm electrolytic bath (100) using a selective ion-passing characteristic of an ion-exchange membrane, are converted into the formic acid using a water-splitting electrodialysis stack that includes the amphoteric ion-exchange membrane and the ion-exchange membrane, and further comprising:
injecting sulfuric acid to a base/salt-generation chamber of the water-splitting electrodialysis stack, so that sulfate is generated through a water-splitting electrodialysis process and the generated sulfate is supplied as a raw material of an anode chamber (110) of the diaphragm electrolytic bath (100).

## Patentansprüche

1. Elektrolyseverfahren, welches umfasst:
einen Elektrolyseprozess (S21A) eines Zuführen einen Elektrolytlösung, die Schwefelsäureionen enthält, zu einer Anodenkammer (110) eines Diaphragma-Elektrolysebades (100), das eine Anode und eine Kathode, die einander zugewandt angeordnet sind, und ein Diaphragma (130) zum Unterteilen der Anodenkammer (110), in der die Anode angeordnet ist, und einer Kathodenkammer enthält, in der die Kathode angeordnet ist, um so ein Peroxodisulfat durch eine anodische Reaktion zu erzeugen, während ein Kohlendioxidgas oder eine Elektrolytlösung, die das Gas darin gelöst enthält, der Kathodenkammer des Diaphragma-Elektrolysebades (100) zugeführt wird (S21B), um so ein Formiat zu erzeugen, und
ein Konzentrations-Ansäuerungsverfahren eines Zuführens des Formiats, das in der Kathodenkammer des Diaphragma-Elektrolysebades (100) erzeugt worden ist, so dass das Formiat mit Wasserstoffionen reagiert, die von außen zugeführt werden oder die durch eine Eigenerzeugung zugeführt werden, um so in eine Ameisensäure umgewandelt zu werden,
wobei das Konzentrations-Ansäuerungsverfahren umfasst:
(S22) einen Ansäuerungsschritt, bei dem die für die Reaktion erforderlichen Wasserstoffionen unter Verwendung von Schwefelsäure aus einer externen Versorgungsquelle zugeführt werden, so dass das aus dem Diaphragma-Elektrolysebad (100) zugeführte Formiat in Ameisensäure umgewandelt wird, und
(S23) einen Trennungsschritt eines Trennens und Konzentrierens der Ameisensäure und des Sulfats, die während des Ansäuerungsschritts erzeugt worden sind, um somit die Ameisensäure zu erzeugen, und welches ferner umfasst:
(S24) ein Zuführen des Sulfats, das während des Trennungsschritts abgetrennt worden ist, als ein Rohmaterial zu der Anodenkammer (110) des Diaphragma-Elektrolysebads (100).

2. Elektrolyseverfahren, welches umfasst:
einen Elektrolyseprozess (S21A) eines Zuführen einer Elektrolytlösung, die Schwefelsäureionen enthält, zu einer Anodenkammer (110) eines Diaphragma-Elektrolysebades (100), das eine Anode und eine Kathode, die einander zugewandt angeordnet sind, und ein Diaphragma (130) zum Unterteilen der Anodenkammer (110), in der die Anode angeordnet ist, und eine Kathodenkammer enthält, in der die Kathode angeordnet ist, um so ein Peroxodisulfat durch eine anodische Reaktion zu erzeugen, während ein Kohlendioxidgas oder eine Elektrolytlösung, die das Gas darin gelöst enthält, der Kathodenkammer des Diaphragmaelektrolysebades (100) zugeführt wird (S21B), um so ein Formiat zu erzeugen, und
ein Konzentrations-Ansäuerungsverfahren, bei dem das in der Kathodenkammer des Diaphragma-Elektrolysebades (100) erzeugte Formiat zugeführt wird, so dass das Formiat mit Wasserstoffionen reagiert, die von außen zugeführt werden oder die durch eine Eigenerzeugung erzeugt werden, um so in eine Ameisensäure umgewandelt zu werden,
wobei das Konzentrations-Ansäuerungsverfahren umfasst:
ein Zuführen des Formiats, das in der Kathodenkammer des Diaphragma-Elektrolysebades (100) erzeugt worden ist, und ein Erzeugen der für die Reaktion erforderlichen Wasserstoffionen durch eine elektrolytische Reaktion einer zweiten Anode (211), die in einer zweiten Anodenkammer (210) angeordnet ist, um so die Umwandlung in die Ameisensäure durchzuführen,
ein Durchleiten der Kationen, die durch die Umwandlung des Formiats in die Ameisensäure in der zweiten Anodenkammer (210) erzeugt worden sind, durch ein zweites Diaphragma (230), und
ein Erzeugen einer Verbindung, die die Kationen enthält, die von der zweiten Anodenkammer (210) durch das zweite Diaphragma (230) bewegt worden sind, und wobei
Hydroxidionen, die durch eine elektrolytische Reaktion der Wasserzersetzung einer zweiten Kathode (221) erzeugt werden, die in einer zweiten Kathodenkammer (220) angeordnet ist, mit den Kationen reagieren, die von der zweiten Anodenkammer (210) durch die zweite Membran (230) bewegt worden sind, um so eine Hydroxidverbindung zu erzeugen.

3. Elektrolyseverfahren nach Anspruch 2, welches ferner umfasst:
ein Zuführen von Schwefelsäure zu einer zweiten Kathodenkammer (220), so dass die Hydroxidionen, die durch eine elektrolytische Reaktion der Wasserzersetzung der zweiten Kathode (221), die in der zweiten Kathodenkammer (220) angeordnet ist, erzeugt worden sind, mit den Wasserstoffionen der Schwefelsäure reagieren, um so eine Neutralisierung durchzuführen, wobei nach der Neutralisierung verbleibende Schwefelsäureionen mit den Kationen reagieren, die aus der zweiten Anodenkammer (210) durch das zweite Diaphragma (230) bewegt worden sind, um so ein Sulfat zu erzeugen, und das erzeugte Sulfat als ein Rohmaterial einer Anodenkammer (110) des Diaphragma-Elektrolysebades (100) zuzuführen.

4. Elektrolyseverfahren, welches umfasst:
einen Elektrolyseprozess (S21A) eines Zuführen einer Elektrolytlösung, die Schwefelsäureionen enthält, zu einer Anodenkammer (110) eines Diaphragma-Elektrolysebades (100), das eine Anode und eine Kathode, die einander zugewandt angeordnet sind, und ein Diaphragma (130) zum Unterteilen der Anodenkammer (110), in der die Anode angeordnet ist, und eine Kathodenkammer enthält, in der die Kathode angeordnet ist, um so ein Peroxodisulfat durch eine anodische Reaktion zu erzeugen, während ein Kohlendioxidgas oder eine Elektrolytlösung, die das Gas darin gelöst enthält, der Kathodenkammer des Diaphragmaelektrolysebades (100) zugeführt wird (S21B), um so ein Formiat zu erzeugen, und
einen Konzentrations-Ansäuerungsprozess, bei dem das in der Kathodenkammer des Diaphragma-Elektrolysebades (100) erzeugte Formiat zugeführt wird, so dass das Formiat mit Wasserstoffionen reagiert, die von außen zugeführt werden oder die durch eine Eigenerzeugung zugeführt werden, um so in eine Ameisensäure umgewandelt zu werden,
wobei bei dem Konzentrations-Ansäuerungsprozess ein Elektrodialysestapel verwendet wird, bei dem eine Anode und eine Kathode einander an ihren beiden Enden gegenüberliegend vorgesehen sind und bei dem eine Vielzahl an Kationenaustauschmembranen und eine Vielzahl an Anionenaustauschmembranen abwechselnd zwischen der Anode und der Kathode angeordnet sind, um so Kammern zu bilden, um so das Formiat, das in der Kathodenkammer des Diaphragma-Elektrolysebades (100) erzeugt worden ist, und die Schwefelsäure als eine Versorgungsquelle der Wasserstoffionen von außen zu den Kammern zuzuführen, so dass die Ameisensäure und das Sulfat getrennt in den verschiedenen Kammern unter Verwendung selektiver lonendurchlass-Eigenschaften von lonenaustauschmembranen erzeugt werden.

5. Elektrolyseverfahren, welches umfasst:
einen Elektrolyseprozess (S21A) eines Zuführen einer Elektrolytlösung, die Schwefelsäureionen enthält, zu einer Anodenkammer (110) eines Diaphragma-Elektrolysebades (100), das eine Anode und eine Kathode, die einander zugewandt angeordnet sind, und ein Diaphragma (130) zum Unterteilen der Anodenkammer (110), in der die Anode angeordnet ist, und eine Kathodenkammer enthält, in der die Kathode angeordnet ist, um so ein Peroxodisulfat durch eine anodische Reaktion zu erzeugen, während ein Kohlendioxidgas oder eine Elektrolytlösung, die das Gas darin gelöst enthält, der Kathodenkammer des Diaphragma-Elektrolysebades (100) zugeführt wird (S21B), um so ein Formiat zu erzeugen, und
ein Konzentrations-Ansäuerungsprozess, bei dem das in der Kathodenkammer des Diaphragma-Elektrolysebades (100) erzeugte Formiat zugeführt wird, so dass das Formiat mit Wasserstoffionen reagiert, die von außen zugeführt werden oder die durch eine Eigenerzeugung erzeugt werden, um so in Ameisensäure umgewandelt zu werden,
wobei bei dem Konzentrations-Ansäuerungsprozess die Wasserstoffionen und die Hydroxidionen, die durch eine für eine amphotere lonenaustauschmembran charakteristische Wasserzersetzung erzeugt werden, und das Formiat, das aus dem Diaphragma-Elektrolysebad (100) unter Verwendung einer selektive Ionen-Durchlass-Eigenschaft einer lonenaustauschmembran, in eine Ameisensäure umgewandelt werden, unter Verwendung eines Wasser spaltenden Elektrodialysestapels, der die amphotere lonenaustauschmembran und die lonenaustauschmembran enthält, und welces ferner umfasst:
ein Einspritzen von Schwefelsäure in eine Kammer zur Erzeugung von Base/Salz des wasserteilenden Elektrodialysestapels, so dass ein Sulfat durch einen wasserteilenden Elektrodialyseprozess erzeugt wird und das erzeugte Sulfat als ein Rohmaterial einer Anodenkammer (110) des Diaphragma-Elektrolysebades (100) zugeführt wird.

## Revendications

1. Procédé d'électrolyse comprenant :
un processus d'électrolyse consistant à (S21A) fournir une solution d'électrolyte contenant des ions d'acide sulfurique à une chambre d'anode (110) d'un bain électrolytique à diaphragme (100) qui comprend une anode et une cathode disposées face à face, et un diaphragme (130) pour partitionner la chambre d'anode (110) dans laquelle l'anode est positionnée et une chambre de cathode dans laquelle la cathode est positionnée pour générer ainsi du peroxydisulfate par une réaction anodique, tandis qu'un gaz dioxyde de carbone ou une solution d'électrolyte contenant le gaz dissous dans celle-ci est fourni (S21B) à la chambre de cathode du bain électrolytique à diaphragme (100) pour générer ainsi du formiate ; et
un processus de concentration-acidification consistant à fournir le formiate généré dans la chambre de cathode du bain électrolytique à diaphragme (100), de sorte que le formiate réagisse avec des ions d'hydrogène fournis depuis un extérieur ou fournis par autogénération pour être ainsi converti en acide formique ;
dans lequel le processus de concentration-acidification comprend :
(S22) une étape d'acidification consistant à fournir les ions d'hydrogène nécessaires à la réaction à l'aide d'acide sulfurique depuis une source d'alimentation externe de sorte que le formiate fourni depuis le bain électrolytique à diaphragme (100) soit converti en acide formique ; et
(S23) une étape de séparation consistant à séparer et concentrer l'acide formique et le sulfate produit à l'étape d'acidification pour produire ainsi l'acide formique, et comprenant en outre :
(S24) la fourniture du sulfate séparé à l'étape de séparation sous forme d'une matière première de la chambre d'anode (110) du bain électrolytique à diaphragme (100).

2. Procédé d'électrolyse comprenant :
un processus d'électrolyse consistant à (S21A) fournir une solution d'électrolyte contenant des ions d'acide sulfurique à une chambre d'anode (110) d'un bain électrolytique à diaphragme (100) qui comprend une anode et une cathode disposées face à face, et un diaphragme (130) pour partitionner la chambre d'anode (110) dans laquelle l'anode est positionnée et une chambre de cathode dans laquelle la cathode est positionnée pour générer ainsi du peroxydisulfate par une réaction anodique, tandis qu'un gaz dioxyde de carbone ou une solution d'électrolyte contenant le gaz dissous dans celle-ci est fourni (S21B) à la chambre de cathode du bain électrolytique à diaphragme (100) pour générer ainsi du formiate ; et
un processus de concentration-acidification consistant à fournir le formiate généré dans la chambre de cathode du bain électrolytique à diaphragme (100), de sorte que le formiate réagisse avec des ions d'hydrogène fournis depuis un extérieur ou fournis par autogénération pour être ainsi converti en acide formique ;
dans lequel le processus de concentration-acidification comprend :
la fourniture du formiate généré dans la chambre de cathode du bain électrolytique à diaphragme (100) et la génération des ions d'hydrogène nécessaires à la réaction par une réaction électrolytique d'une seconde anode (211) disposée dans une seconde chambre d'anode (210) pour réaliser ainsi une conversion en acide formique ;
le passage de cations, qui sont générés par la conversion du formiate en acide formique dans la seconde chambre d'anode (210), à travers un second diaphragme (230) ; et
la génération d'un composé comprenant les cations déplacés de la seconde chambre d'anode (210) à travers le second diaphragme (230), et dans lequel :
des ions d'hydroxyde, qui sont générés par une réaction électrolytique à décomposition d'eau d'une seconde cathode (221) positionnée dans une seconde chambre de cathode (220), réagissent avec les cations déplacés depuis la seconde chambre d'anode (210) à travers le second diaphragme (230) pour générer ainsi un composé hydroxyde.

3. Procédé d'électrolyse selon la revendication 2, comprenant en outre :
la fourniture d'acide sulfurique à une seconde chambre de cathode (220), de sorte que des ions d'hydroxyde qui sont générés par une réaction électrolytique à décomposition d'eau de la seconde cathode (221) positionnée dans la seconde chambre de cathode (220), réagissent avec les ions d'hydrogène de l'acide sulfurique pour réaliser ainsi une neutralisation, les ions d'acide sulfurique restant après la neutralisation réagissent avec les cations déplacés depuis la seconde chambre d'anode (210) à travers le second diaphragme (230) pour générer ainsi du sulfate, et le sulfate généré est fourni en tant qu'une matière première d'une chambre d'anode (110) du bain électrolytique à diaphragme (100).

4. Procédé d'électrolyse comprenant :
un processus d'électrolyse consistant à (S21A) fournir une solution d'électrolyte contenant des ions d'acide sulfurique à une chambre d'anode (110) d'un bain électrolytique à diaphragme (100) qui comprend une anode et une cathode disposées face à face, et un diaphragme (130) pour partitionner la chambre d'anode (110) dans laquelle l'anode est positionnée et une chambre de cathode dans laquelle la cathode est positionnée pour générer ainsi du peroxydisulfate par une réaction anodique, tandis qu'un gaz dioxyde de carbone ou une solution d'électrolyte contenant le gaz dissous dans celle-ci est fourni (S21B) à la chambre de cathode du bain électrolytique à diaphragme (100) pour générer ainsi du formiate ; et
un processus de concentration-acidification consistant à fournir le formiate généré dans la chambre de cathode du bain électrolytique à diaphragme (100), de sorte que le formiate réagisse avec des ions d'hydrogène fournis depuis un extérieur ou fournis par autogénération pour être ainsi converti en acide formique ;
dans lequel, dans le processus de concentration-acidification, un empilement d'électrodialyse, dans lequel une anode et une cathode sont prévues face à face aux deux extrémités de celui-ci et une pluralité de membranes d'échange de cations et une pluralité de membranes d'échange d'anions sont agencées de manière alternée entre l'anode et la cathode pour former ainsi des compartiments, est utilisé pour fournir ainsi le formiate généré dans la chambre de cathode du bain électrolytique à diaphragme (100) et de l'acide sulfurique en tant que source d'alimentation en ions d'hydrogène depuis un extérieur aux compartiments, de sorte que l'acide formique et le sulfate soient générés séparément dans les différents compartiments à l'aide de caractéristiques de passage d'ions sélectives de membranes d'échange d'ions.

5. Procédé d'électrolyse comprenant :
un processus d'électrolyse consistant à (S21A) fournir une solution d'électrolyte contenant des ions d'acide sulfurique à une chambre d'anode (110) d'un bain électrolytique à diaphragme (100) qui comprend une anode et une cathode disposées face à face, et un diaphragme (130) pour partitionner la chambre d'anode (110) dans laquelle l'anode est positionnée et une chambre de cathode dans laquelle la cathode est positionnée pour générer ainsi du peroxydisulfate par une réaction anodique, tandis qu'un gaz dioxyde de carbone ou une solution d'électrolyte contenant le gaz dissous dans celle-ci est fourni (S21B) à la chambre de cathode du bain électrolytique à diaphragme (100) pour générer ainsi du formiate ; et
un processus de concentration-acidification consistant à fournir le formiate généré dans la chambre de cathode du bain électrolytique à diaphragme (100), de sorte que le formiate réagisse avec des ions d'hydrogène fournis depuis un extérieur ou fournis par autogénération pour être ainsi converti en acide formique ;
dans lequel, dans le processus de concentration-acidification, les ions d'hydrogène et les ions d'hydroxyde, générés par une caractéristique de décomposition d'eau d'une membrane d'échange d'ions amphotères, et le formiate, fourni depuis le bain électrolytique à diaphragme (100) à l'aide d'une caractéristique de passage d'ions sélective d'une membrane d'échange d'ions, sont convertis en acide formique à l'aide d'un empilement d'électrodialyse à fractionnement d'eau qui comprend la membrane d'échange d'ions amphotères et la membrane d'échange d'ions, et comprenant en outre :
l'injection d'acide sulfurique dans une chambre de génération de base/sel de l'empilement d'électrodialyse à fractionnement d'eau, de sorte que du sulfate soit généré par un processus d'électrodialyse à fractionnement d'eau et le sulfate généré soit fourni en tant qu'une matière première d'une chambre d'anode (110) du bain électrolytique à diaphragme (100).
